**Europäisches Patentamt**

**European Patent Office**

**Office européen des brevets**

(11) Veröffentlichungsnummer: **0 036 532**
**A1**

# EUROPÄISCHE PATENTANMELDUNG

(21) Anmeldenummer: **81101616.1**

(22) Anmeldetag: **06.03.81**

(51) Int. Cl.³: **G 01 L 1/12**

(30) Priorität: **14.03.80 DE 3009742**

(43) Veröffentlichungstag der Anmeldung: **30.09.81**
**Patentblatt 81/39**

(84) Benannte Vertragsstaaten: **FR GB IT SE**

(71) Anmelder: **Kienzle Apparate GmbH,
Heinrich-Hertz-Strasse Postfach 1650,
D-7730 Villingen-Schwenningen (DE)**

(72) Erfinder: **Kuhn, Peter, Dr., Grimmelshauserstrasse 3,
D-7730 Villingen-Schwenningen (DE)**
Erfinder: **Gaus, Gerhard, Weichselstrasse 15,
D-7730 Villingen-Schwenningen (DE)**
Erfinder: **Weber, Robert, Alemannenstrasse 20,
D-7734 Brigachtal 1 (DE)**

(54) **Geber zum Messen mechanischer Kräfte.**

(57) Es wird ein Geber zum Messen mechanischer Kräfte vorgeschlagen, dessen draht- oder bandförmiger Meßkörper (1) aus einem amorphen, ferromagnetischen Metall hergestellt ist und im meßbereiten Zustand unter mechanischer Vorspannung steht. Als Kraftleiter dient ein ringförmiger Halter (2) in dem der Meßkörper (1), dem zur Meßwertübertragung eine Koppelspule (5) zugeordnet ist, diametral angeordnet bzw. eingespannt ist. Mit der Spannmutter (9) läßt sich die erforderliche Vorspannung einstellen.

ACTORUM AG

0036532

11.3.1980
o72 dö zw
Akte 1697

Kienzle Apparate GmbH, 7730 Villingen-Schwenningen

Geber zum Messen mechanischer Kräfte

Die Erfindung betrifft einen Geber zum Messen mechanischer Kräfte mit wenigstens einem dehnbaren Meßkörper aus magnetoelastischem Material, mit Mitteln zum Einleiten der zu messenden Kräfte in den Meßkörper und Bilden von meßkraftproportionalen mechanischen Spannungen in dem Meßkörper sowie einer mit dem Meßkörper elektromagnetisch gekoppelten Meßwert-Übertragungseinrichtung.

Bekanntlich werden zum Messen mechanischer Kräfte, obwohl erhebliche Nachteile wie magnetische Beeinflußbarkeit und somit Abschirmaufwand, aber auch Nichtlinearität in Kauf zu nehmen sind, magnetoelastische Effekte vorzugsweise deshalb genutzt, weil entsprechende Geber einerseits vergleichsweise empfindlich sind und dementsprechend hohe Meßsignale liefern, anderseits einfach herstellbar sind und insbesondere dort anwendbar sind, wo rauhe Betriebsbedingungen vorherrschen.

Ein bisher ungelöstes Problem stellt jedoch die mangelnde mechanische Festigkeit und für gewisse Anwendungsfälle zu geringe Dehnbarkeit der für solche Geber verwendeten weichmagnetischen Materialien dar, so daß, vorausgesetzt daß die zu erwartende Dehnung die Streckgrenze des verwendeten Materials nicht übersteigt, zur Vermeidung unzulässig hoher Spannungen im Meßkörper schon bei relativ kleinen Kräften erhebliche Materialquerschnitte vorgesehen werden müssen, was letzten Endes zu relativ großvolumigen Meßkörpern führt. Insbesondere bei auf Zug beanspruchten und freitragend angeordneten Meßkörpern entstehen auf diese Weise und dadurch, daß die Spulen der Meßwert-Übertragungseinrichtung aus magnetischen Gründen unmittelbar auf dem Meßkörper angeordnet sind, beachtliche Massen, die im Falle der Anwendung eines derartigen Gebers, beispielsweise zur Ladegewichtsmessung an Kraftfahrzeugen, wo während der Fahrt ein breites Spektrum energiereicher Schwingungen auf diese Geber einwirkt, Eigenschwingungen ausüben und somit die Einspann- bzw. Befestigungsstellen des Meßkörpers erheblich belasten.

Da das Befestigen der Enden des Meßkörpers an einem geeigneten, kraftübertragenden und kraftleitenden Halter oder Träger aus fertigungstechnischen Gründen vielfach durch Schweißen, insbesondere durch Punktschweißen, erfolgt, ist unter den geschilderten Bedingungen die Bruchgefahr an den Befestigungsstellen erheblich. Außerdem sind Kriechvorgänge und Ermüdungserscheinungen, insbesondere wenn der Meßkörper unter einer gewissen Vorspannung steht, nicht auszuschließen. Schwierigkeiten entstehen ferner dadurch, daß infolge des relativ großen Materialquerschnitts des Meßkörpers, insbesondere bei Punktschweißverbindungen, eine homogene Krafteinleitung und damit auch ein homogener Kraftfluß im Meßkörper nicht gegeben ist. Dies ist zusätzlich auch dann der Fall, wenn der Meßkörper einflächig mit dem kraftleitenden Halter oder einem entsprechenden Übertragungsmittel verbunden ist, die zu messenden Kräfte also nicht unmittelbar in die neutrale Faser des in diesem Falle balkenförmigen Meßkörpers eingeleitet werden.

Diese Mängel bedingen sog. äußere Hystereseerscheinungen, die verständlicherweise die Reproduzierbarkeit des magnetoelastischen Effektes und somit auch die der Meßergebnisse ent-

0036532

scheidend beeinträchtigen. Hinzu kommt, daß die Eindringtiefe des magnetischen Flusses der mit dem Meßkörper in Wirkverbindung stehenden Koppelspulen begrenzt ist, große Meßkörperquerschnitte dementsprechend auch zu inhomogenen magnetischen Flußverteilungen im Meßkörper führen.

Darüber hinaus läßt es, abgesehen von möglichen Drifterscheinungen, die mangelnde Zugfestigkeit der bisher üblichen magneto-elastischen Materialien nicht oder nur in unbedeutendem Maße zu, den Meßkörper derart mechanisch vorzuspannen, daß wenigstens der Nullpunktbereich der magneto-elastischen Kennlinie unterdrückt wird, und, was anzustreben ist, der Meßbereich in einen relativ linearen Teil der Kennlinie gelegt werden kann. Unbefriedigend ist verständlicherweise auch die beispielsweise im Vergleich zu Dehnungsmeßstreifengebern erhebliche Bauhöhe der bisher bekannten magneto-elastischen Geber.

Der vorliegenden Erfindung lag somit die Aufgabe zugrunde, die festgestellten Mängel bekannter magneto-elastischer Geber zu beseitigen, insbesondere jedoch ein Material zu finden, welches bei vergleichsweise guten magneto-elastischen Eigenschaften die Voraussetzungen für eine massearme Anordnung bietet, Lösungen hinsichtlich einer relativ flachen Bauform sowie eines homogenen Kraftflusses im Meßkörper, vor allem unter Zugbeanspruchung, gestattet, und den besonderen Bedingungen, denen ein Geber zur Ladegewichtsmessung an Kraftfahrzeugen ausgesetzt ist, gerecht wird.

Die Lösung dieser Aufgabe sieht vor, daß der Meßkörper aus einem amorphen ferromagnetischen Metall hergestellt ist, daß für den Meßkörper im wesentlichen draht- oder bandförmiges Material Anwendung findet, daß der Meßkörper ein sehr kleines Querschnitt-Längen-Verhältnis aufweist und daß der Meßkörper im meßbereiten Zustand unter einer mechanischen Vorspannung steht.

Ein bevorzugtes Ausführungsbeispiel der Erfindung ist dadurch gekennzeichnet, daß ein Halter vorgesehen ist, in dem der Meßkörper wenigstens einseitig gelenkig angeordnet ist, außerdem dadurch, daß der Halter als ein im wesentlichen ringförmiger Körper ausgebildet ist, daß in der Mittenebene des Halters diametral gegenüberliegend Schlitze ausgebildet sind, daß Mittel zum Festhalten des Meßkörpers vorgesehen sind, die durch die Schlitze von außen in den Halter einführbar sind, und letztlich dadurch, daß die elektromagnetische Kopplung zwischen dem Meßkörper und der Meßwert-Übertragungseinrichtung durch wenigstens eine einen Teil eines variablen Frequenzgenerators bildende und den Meßkörper vorzugsweise auf seiner gesamten Länge umschließende Koppelspule erzeugt wird.

Durch die Verwendung von amorphem, ferromagnetischem Material, welches bekanntlich sowohl außerordentliche weichmagnetische Eigenschaften, d.h. extrem kleine Ummagnetisierungsverluste und Permeabilitäten in einer Größenordnung von $\mu/\text{max.} = 500.000$ aufweist, also auch beachtlich hohe mechanische Kennwerte, d.h. einen großen elastischen Bereich bei Zugfestigkeiten von wenigstens $1.800\,\text{N/mm}^2$ besitzt, läßt sich der Meßkörper als äußerst dünnes Band- oder Drahtstück von wenigstens der vierfachen Dehnbarkeit im Vergleich zu bisher bekannten weichmagnetischen Materialien herstellen. Somit ist der Meßkörper extrem massearm ausbildbar, so daß Eigenschwingungen, falls sie auftreten, auf die Einspannstellen des Meßkörpers wenig wirksam sind. Dies gilt auch dann noch, wenn der Meßkörper zur Erzielung einer höheren Empfindlichkeit als ein aus mehreren einzelnen Bändchen bestehender, lamellierter Körper ausgebildet wäre, oder wenn als besonderes Ausführungsbeispiel eine als gedruckte Spule ausgebildete Koppelspule unmittelbar am Meßkörper befestigt wäre. Infolge der hohen mechanischen Belastbarkeit des amorphen Materials ist die für das Festlegen des Gebernullpunktes erwünschte Vorspannung lediglich von magnetischen Größen, in diesem Falle von der Sättigungs-Magnetostriktion, begrenzt, d.h. daß eine gute Justierbarkeit gegeben ist. Ferner zeichnet sich ein aus amorphem Material hergestellter Meßkörper durch eine für das Anwendungsgebiet "Kraftfahrzeug" ausreichend hohe Lastwech-

-5-    0036532

selfestigkeit aus. Andererseits ist festzuhalten, daß bei den
möglichen relativ hohen mechanischen Spannungen im Meßkörper
eine spannungsarme Kraftleitung zum Meßkörper in feinmechanischen Dimensionen herstellbar ist.

Da die amorphen Metalle eine erstaunliche Korrosionsbeständigkeit aufweisen und, obwohl von amorpher Struktur, nicht
spröde sind, also gebogen, gestanzt und punktgeschweißt werden können, ist für den angestrebten Anwendungsfall, insbesondere hinsichtlich des dort herrschenden aggressiven Milieus, aber auch hinsichtlich der Wahlfreiheit der Fertigungsverfahren, eine zusätzliche vorteilhafte Eignung gegeben.

Der erfindungsgemäße Meßkörper ermöglicht, abgesehen davon,
daß er der bereits bekannten Erkenntnis entgegenkommt, daß
die Meßzone wegen der Proportionalität zwischen deren Länge
und der Empfindlichkeit so lang wie möglich gestaltet werden
sollte, insbesondere in seiner bandförmigen Gestalt eine
überraschend flache Bauform des Gebers in einer Größenordnung von wenigen Millimetern. Ferner ist es denkbar, in
einem kraftleitenden Halter wenigstens zwei Meßkörper derart
anzuordnen, daß bei Krafteinleitung in den Halter der eine
auf Zug, der andere auf Verringerung einer entsprechend gewählten Vorspannung beansprucht wird, ohne daß dabei die
beiden Meßkörper wesentlich außerhalb der neutralen Faser
des kraftleitenden Halters anzuordnen wären. Mittels an sich
bekannter schaltungstechnischer Maßnahmen (Differenzbildung)
lassen sich auf diese Weise Temperaturfehler kompensieren
und die Charakteristik des Gesamtsystems linearisieren. Dem
Ziel der Fehlermittlung dient auch die gemäß dem bevorzugten
Ausführungsbeispiel getroffene Wahl der Meßwert-Übertragungseinrichtung mit aufgrund der vorgesehenen Resonanzfrequenzmessung lediglich einer den Meßkörper in seiner gesamten freien Länge umgreifenden Koppelspule. Dadurch werden im Gegensatz zur ebenfalls üblichen Transformatorkopplung nicht nur
der Spulenaufwand verringert, sondern auch dehnungs- und
durchflutungsbedingte Ungleichmäßigkeiten der magnetoelastischen Wirkung ausgeglichen.

Im folgenden sei ein Ausführungsbeispiel der Erfindung anhand der beigefügten Zeichnungen näher erläutert.

Es zeigen

FIG. 1 eine Draufsicht des erfindungsgemäßen Gebers,

FIG. 2 eine Seitenansicht gemäß FIG. 1,

FIG. 3 eine vergrößerte Teilschnittdarstellung A-B in FIG. 1,

FIG. 4 ein die Meßwertverarbeitung betreffendes Blockschaltbild.

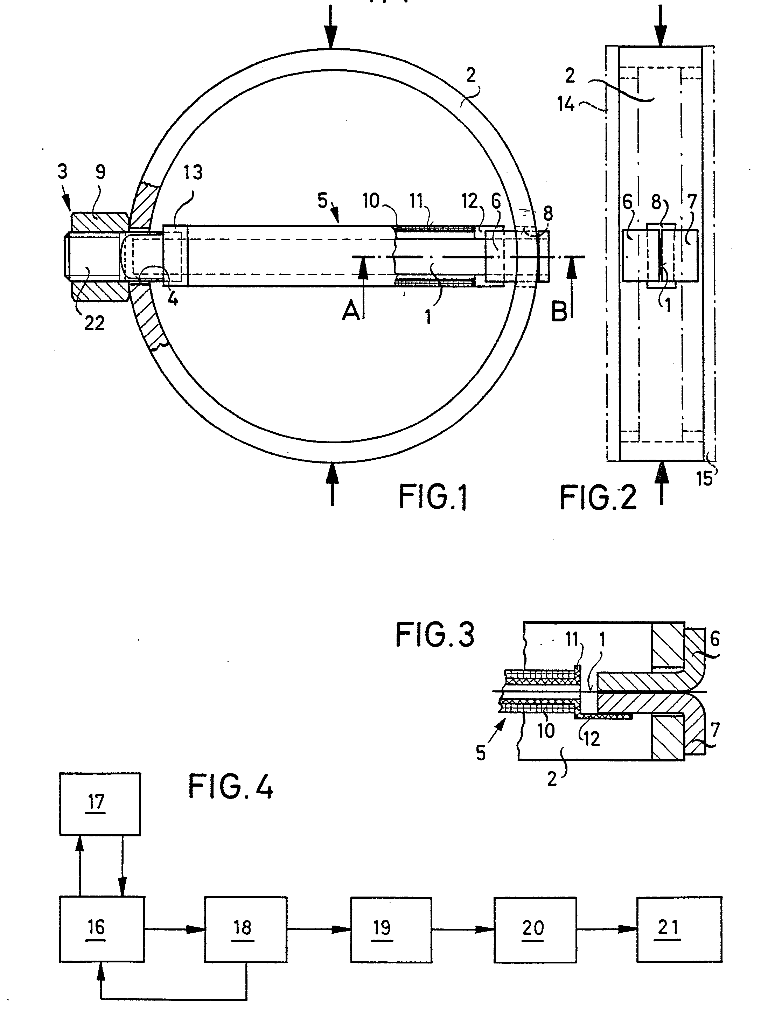

Wie FIG. 1 zeigt, ist ein bandförmiger Meßkörper 1 aus amorphem ferromagnetischem Metall in einem als Kraftleiter dienenden, ringförmigen Halter 2 diametral angeordnet. Die zu messende Kraft wird ebenfalls diametral, jedoch rechtwinklig zum Meßkörper 1 in den Halter 2 eingeleitet. Dabei ist es wesentlich, daß geeignete, lediglich durch Pfeile symbolisierte Übertragungsmittel, die mit dem Meßobjekt fest verbunden sind, in der neutralen Faser des Halters 2, für den selbstverständlich auch andere Bauformen denkbar sind, angreifen.

Die Befestigung des Meßkörpers 1 am Halter 2 erfolgt einerseits mittels eines Gewindebolzens 3, der teilweise, um in einem im Halter 2 vorgesehenen Schlitz 4 einführbar zu sein, symmetrisch zu seiner Mittenebene abgeflacht ist. Ein in der Mittenebene vorgesehener, nicht näher bezeichneter Schlitz dient der Aufnahme des Meßkörpers 1, der in diesem Schlitz verpreßt oder verschweißt ist, wobei durch geeignete Lochungen oder Kerbungen die Kriechfestigkeit dieser Verbindung verbessert werden kann. In der beschriebenen, vorgefertigten Form wird der Meßkörper 1 in den Halter 2 eingeführt und gleichzeitig durch die Koppelspule 5 gefädelt. Zur Befestigun

des anderen Endes des Meßkörpers 1 am Halters 2 sind zwei rechtwinkelförmig angebogene Backen 6 und 7 vorgesehen, die - wie dargestellt - in einen weiteren am Halter 2 befindlichen Schlitz 8, der mit dem Schlitz 4 fluchtet, einführbar sind und zusammen mit dem dazwischen liegenden Meßkörper 1 ebenfalls verpreßt bzw. verschweißt, vorzugsweise lasergeschweißt, werden. Selbstverständlich ist, da der Meßkörper 1 bereits eine relativ große Adhäsionsfläche bietet, in gewissen Anwendungsfällen auch ein Befestigen durch Kleben denkbar.

Es ist ferner vorgesehen, daß die Schlitze 4 und 8 sowohl in bezug auf die Backen 6 und 7 als auch den angeflachten Gewindebolzen 3 ein gewisses Spiel aufweisen, so daß der Meßkörper 1 zunächst lose gehaltert ist. Dies bedeutet, daß eine gewisse Gelenkigkeit, d.h. die Möglichkeit des Pendelns um die Berührungslinie am Halter 2 sowohl der Backen 6 und 7 als auch der mit dem Gewinde 22 des Gewindebolzens 3 in Wirkverbindung stehenden Spannmutter 9 gegeben ist, so daß sich beim Vorspannen des Meßkörpers 1 mittels der Spannmutter 9 ein biegespannungsfreies Einrichten des Meßkörpers 1 ergibt. Die dem Halter zugewandte Fläche der Spannmutter 9 bzw. die einer dazwischen liegenden Scheibe kann auch, um diesen Effekt des selbsttätigen Einrichtens des Meßkörpers 1 sicherzustellen, kugelförmig ausgebildet sein. Selbstverständlich ist nach erfolgtem Vorspannen des Meßkörpers 1 ein Sichern der Schraubverbindung erforderlich.

Die Koppelspule 5, deren Wicklung 10 von einem Spulenkörper 11 getragen wird, ist in dem dargestellten Ausführungsbeispiel mittels am Spulenkörper 11 angeformter Lappen 12 und 13 oder jeweils einem Lappenpaar einerseits an den Backen 6, 7, andererseits am Gewindebolzen 3 durch Kleben "angeheftet", wobei das Kraftübertragungsvermögen des Spulenkörpers 11 vernachlässigbar sein muß. Denkbar ist aber auch, daß die Koppelspule 5 an einem in den Halter 2 einsetzbaren elastischen Boden 14 befestigt wird. In FIG. 2 ist strichpunktiert dargestellt, wie der Halter 2 durch einen derartigen Boden 14 und einen gleichgestalteten Deckel 15 als eine geschlossene Dose ausbildbar ist, wobei Deckel und Boden, um den Fremdfeldeinfluß auszuschalten, aus einem relativ weichmagnetischen Werkstoff mit wiederum vernachlässigbarem Kraftleitvermögen hergestellt sein sollten. Denkbar ist in diesem Zusammenhang auch eine in geeigneter Weise, beispielsweise an den Übertragungsmitteln befestigbare, den kraftleitenden Halter 2 berührungsfrei umgreifende Abschirmhaube, die beispielsweise aus einem in Kunststoff eingebetteten Geflecht aus amorphem Material hergestellt ist.

Eine vereinfachte Variante hinsichtlich der Befestigung des Meßkörpers 1 und dessen Vorspannungsjustierung könnte vorsehen, daß, wie beschrieben, das eine Ende des Meßkörpers 1 wie bereits dargestellt in gewisser Weise gelenkig angeordnet wird, während das andere durch einen Schlitz im Halter 2 hindurchgeführt und an der einen Schlitzwand, die in der Mittenebene des Halters 2 liegt, mittels eines in den Schlitz eingeführten Klemmstückes verpreßt wird. Eine definierte Vorspannung des Meßkörpers 1 ist in diesem Falle dadurch zu erreichen, daß der Halter 2 während des Befestigens des Meßkörpers 1 unter Vorspannung gehalten wird.

Letzlich ist es aber auch möglich, auf einen kraftleitenden Halter zu verzichten und den Meßkörper 1 unmittelbar an den am Meßobjekt befestigten Übertragungsmitteln anzuordnen, wobei von Nachteil ist, daß die Justierung selbstverständlich erst am Einbauort vorgenommen werden kann.

Der Vollständigkeit halber sei noch erwähnt, daß die Wicklung 10 der Koppelspule 5 Teil eines variablen, vorzugsweise im unteren kHz-Bereich arbeitenden Frequenzgenerators 16 bildet, dessen Frequenz mittels des beschriebenen Gebers 17 dehnungsabhängig veränderbar ist. Weitere Schaltungsteile zur Verarbeitung der vom Geber 17 gelieferten Meßwerte sind eine dem

0036532

Frequenzgenerator 16 nachgeschaltete Maximalamplituden-Erkennungsschaltung 18, ein Schaltungsteil zur Frequenzmessung 19, eine Vergleichsschaltung 20, die Übereinstimmung der Meßwerte mit gespeicherten Kennwerten sucht, sowie eine vorzugsweise digitale Anzeigeeinrichtung 21.

Geber zum Messen mechanischer Kräfte

Patentansprüche:

1. Geber zum Messen mechanischer Kräfte mit wenigstens einem dehnbaren Meßkörper aus magnetoelastischem Material, mit Mitteln zum Einleiten der zu messenden Kräfte in den Meßkörper und Bilden von meßkraftproportionalen mechanischen Spannungen in dem Meßkörper sowie einer mit dem Meßkörper elektromagnetisch gekoppelten Meßwert-Übertragungseinrichtung,
dadurch gekennzeichnet,
daß der Meßkörper (1) aus einem amorphen, ferromagnetischen Metall hergestellt ist,
daß für den Meßkörper (1) im wesentlichen draht- oder bandförmiges Material Anwendung findet,
daß der Meßkörper (1) ein sehr kleines Querschnitt-Längen-Verhältnis aufweist
und daß der Meßkörper (1) im meßbereiten Zustand unter einer mechanischen Vorspannung steht.

2. Geber nach Anspruch 1,
dadurch gekennzeichnet,
daß ein Halter (2) vorgesehen ist, in dem der Meßkörper (1) wenigstens einseitig gelenkig angeordnet ist.

3. Geber nach Anspruch 1 und 2,
dadurch gekennzeichnet,
daß der Halter (2) als ein im wesentlichen ringförmiger Körper ausgebildet ist,
daß in der Mittenebene des Halters (2) diametral gegenüberliegend Schlitze (4, 8) ausgebildet sind
und daß Mittel (3 und 6,7) zum Festhalten des Meßkörpers (1) vorgesehen sind, die durch die Schlitze (4, 8) von außen in den Halter (2) einführbar sind.

0036532

4. Geber nach Anspruch 1 bis 3,
dadurch gekennzeichnet,
daß wenigstens einem der Mittel (3 bzw. 6, 7) zum Festhalten des Meßkörpers (1) Mittel (9, 22) zum Spannen des Meßkörpers (1) zugeordnet sind.

5. Geber nach Anspruch 1 bis 4,
dadurch gekennzeichnet,
daß dem Halter (2) sowohl ein Boden (14) als auch ein Deckel (15) mit vernachlässigbarem Kraftleitvermögen und magnetischer Schirmwirkung zugeordnet sind.

6. Geber nach Anspruch 1 bis 5,
dadurch gekennzeichnet,
daß die elektromagnetische Kopplung zwischen dem Meßkörper (1) und der Meßwert-Übertragungseinrichtung (16, 18, 19) durch wenigstens eine einen Teil eines variablen Frequenzgenerators (16) bildende und den Meßkörper (1) vorzugsweise auf seiner gesamten Länge umschließende Koppelspule (5) erzeugt wird.

7. Geber nach Anspruch 1 bis 6,
dadurch gekennzeichnet,
daß der Spulenkörper (11) der Koppelspule (5) den Meßkörper (1) berührungsfrei umschließt und mit den Mitteln (3 und 6,7) zum Festhalten des Meßkörpers (1) fest verbunden ist.

8. Geber nach Anspruch 1 bis 6,
dadurch gekennzeichnet,
daß die Koppelspule (5) als"gedruckte" Spule ausgebildet ist.

9. Geber nach Anspruch 1,
dadurch gekennzeichnet,
daß der Meßkörper (1) aus mehreren einzelnen Elementen als lamellierte Körper ausgebildet ist.

0036532

10. Geber nach Anspruch 1,
    dadurch gekennzeichnet,
    daß der Meßkörper (1) unmittelbar mit den am Meßobjekt be-
    festigten Übertragungsmitteln angeordnet ist.

0036532

FIG.1  FIG.2

FIG.3

FIG.4

Europäisches Patentamt

**EUROPÄISCHER RECHERCHENBERICHT**

0036532

Nummer der Anmeldung

EP 81 10 1616.1

| Kategorie | Kennzeichnung des Dokuments mit Angabe, soweit erforderlich, der maßgeblichen Teile | betrifft Anspruch |
|---|---|---|
| | DE - A1 - 2 835 614 (ASEA AB) <br> * Ansprüche 2 bis 5; Fig. 8 bis 9 * <br> -- | 1 |
| | DE - B - 1 297 890 (SIEMENS AG) <br> * Spalte 3, Zeile 39 bis Spalte 4, Zeile 19 * <br> -- | 1 |
| A | DE - A - 2 134 765 (HONEYWELL INC.) <br> * ganze Schrift * <br> -- | |
| A | DE - B - 1 219 251 (ALLMÄNNA SVENSKA ELEKTRISKA AB) <br> * ganze Schrift * <br> -- | |
| A | DE - B2 - 2 263 646 (ALLMÄNNA SVENSKA ELEKTRISKA AB) <br> * ganze Schrift * <br> -- | |
| A | DE - A1 - 2 906 965 (NIPPON ELECTRIC CO., LTD.) <br> * Ansprüche 1, 2, 6; Seite 14, Abschnitte 2, 3 * <br> ---- | |

**EINSCHLÄGIGE DOKUMENTE**

KLASSIFIKATION DER ANMELDUNG (Int. Cl.³)

G 01 L    1/12

RECHERCHIERTE SACHGEBIETE (Int. Cl.³)

G 01 G    3/15
G 01 L    1/12
G 01 L    9/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| Berlin | 22-06-1981 | KÖHN |

EPA form 1503.1  06.78